# EUROPEAN PATENT SPECIFICATION

(11) **EP 1 902 967 B1**
(45) Date of publication and mention of the grant of the patent: **28.09.2011**
(21) Application number: 06768018.1
(22) Date of filing: 10.07.2006
(51) Int. Cl.: B65D 17/50, B65D 5/40, B65D 5/74, B32B 27/32

(54) **PACKAGING CONTAINER, PROCESS FOR PRODUCTION OF INNER TAPE, AND INNER TAPE FOR CONTAINERS**
VERPACKUNGSBEHÄLTER, VERFAHREN ZUR HERSTELLUNG EINES INNENKLEBEBANDS UND INNENKLEBEBAND FÜR BEHÄLTER
CONTENEUR D'EMBALLAGE, PROCÉDÉ POUR PRODUCTION DE BANDE INTERNE ET BANDE INTERNE POUR CONTENEURS

(30) Priority: 14.07.2005 JP 2005205555
(43) Date of publication of application: 26.03.2008
(73) Proprietor: Tetra Laval Holdings & Finance SA, 1009 Pully (CH)
(72) Inventor: IKENOYA, Tadakatsu, c/o NIHON TETRA PAK K.K., Tokyo 1028544 (JP)
(74) Representative: Müller, Frank Peter
(86) International application number: PCT/JP2006/313656
(87) International publication number: WO 2007/007700

(56) References cited:
- EP-A1- 0 444 862
- EP-A1- 1 319 602
- JP-A- 03 275 444
- US-A- 5 620 550

## Description

### [Technical Field]

The present invention relates to a packaging container having an opening section through which, for instance, a fluid food such as juice or milk can be filled in or pouring out, a method of producing innertape for packaging containers, and innertape for containers.

### [Background Technology]

A packaging paper container made for accommodating therein a drink such as milk, juice, or mineral water is made, for instance, from a web-like laminated packaging material with crease lines provided thereon and also with a design providing good appearance printed thereon.
The laminated packaging material has, for instance, an inner layer made of an thermoplastic material such as polyethylene resin, an aluminum foil layer, a paper layer, and an outer layer made of a thermoplastic material provided in the order described above from the innermost side to the outer side.

For producing the packaging paper container as described above, the web-like laminated packaging material is formed into a tubular body by sealing the material along the longitudinal direction, and a food is filled in the tubular packaging material. Then the tubular packaging material is sealed and cut in the transversal direction. Finally the tubular packaging material is folded along the transversals and formed into the final form. The final form includes a block-like form, an octagonal column-like form, a regular tetrahedron, and the like.

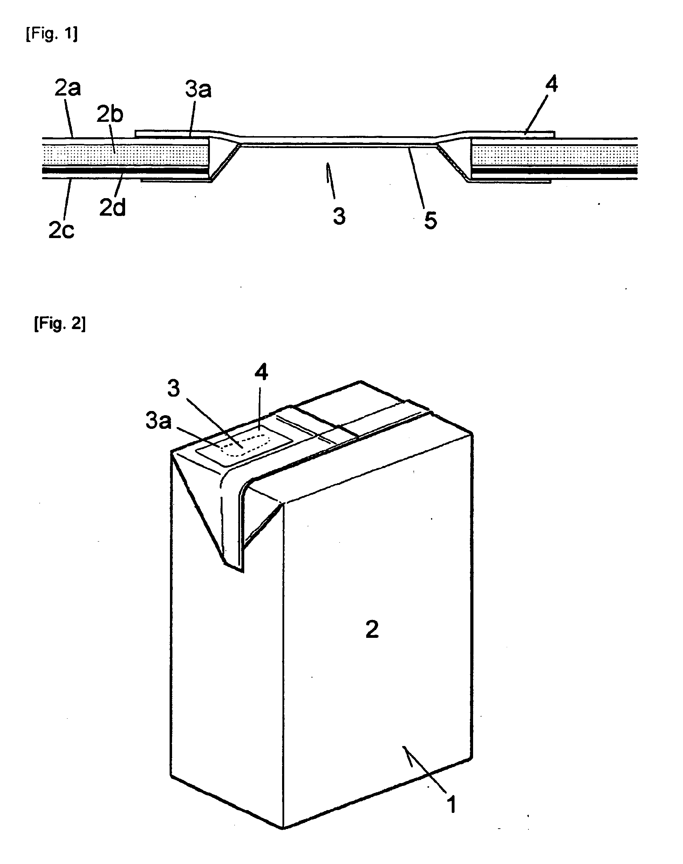

A packaging container for a liquid food has main body of the packaging container, an opening section provided at a top of the container for pouring out the liquid food, an opening device such as a spout, a lid, or a cap, and a pull-tab, or a straw. Fig. 2 illustrates an example of the packaging container sealed with a pull-tab 4. This packaging container 1 has a main body 2, and an opening section 3 provided at a top of the container for a fluid food.

The opening section 3 in the example above is formed with a punch hole obtained by punching a laminated packaging material used as a wall material for the container in the top section.
Fig. 1 is a cross-sectional view illustrating the opening section and a portion around the opening section. For sealing the opening section 3, the opening section 3 is covered with a pull-tab 4 and sealed from above the pull-tab 4 along the outer circumference 3a of the opening section 3. Furthermore, the opening section 3 is covered with inner tape 5 from under the opening section 3, and a lower surface of the outer circumference 3a of the opening section 3 and an inner surface of the pull-tab 4 are fusion-bonded to each other for sealing.

The innertape used for sealing the opening section from the inner side is produced, for instance, by laminating a polyethylene film, a polyvinylidene chloride film, and a polyethylene film with adhesive and by means of dry lamination. The pull-tab is formed with an aluminum film and by coating polyethylene resin layer on at least one of the inner surfaces.
To pour out the liquid food for drinking, a tab of an unsealed portion of the pull-tab 4 is pulled up and the innertape is broken at a portion near an edge portion of the opening section to pull off he pull-tab 4 and break a seal for the opening section 3.

Japanese Patent Laid-open Publication No. 2002-321717 discloses a packaging container in which the opening section is covered with a pull-tab and the pull-tab is adhered without any pinhole by pressing inner tape with air from the inner side.

US 5,620,550 A discloses a packaging material for producing packages including a foundation layer that is provided with a through hole. A thermoplastic strip covers the through hole and an outer layer completely covers the thermoplastic strip and foundation layer. Various other layers can also be laminated to the foundation layer. When the thermoplastic strip is torn off, the various other layers accompany the thermoplastic strip, thereby exposing the through hole.

EP 0 444 862 A1 discloses a tightly sealed paper container, wherein a through hole is formed in a container material laminated with thermoplastic synthetic resin layers provided on the front and rear surfaces thereof, characterized by a bottom board made of thermoplastic synthetic resin and having a through hole equal in size to or smaller than said through hole in the container material, is bonded to the front surface of the container such that the whole of the through hole of the bottom board coincides with the through hole of the container material or is positioned within the contour of the through hole of the container material; a top board made of thermoplastic synthetic resin and having a coupling projection, the outer periphery of which is at least partially coupled in pressure contact with the inner wall of the through hole of the bottom board, the top board being superposed on the bottom board with said coupling projection coupled into the through hole of the bottom board; and a barrier film covering the through hole of the container material and laminated on the rear surface of the container, said barrier film being sealed with respect to the rear surface of the container material and to the top surface of the coupling projection coupled into the through hole of the bottom board.

EP 1 319 602 A1 relates to a repeatedly closable packaging unit for pourable, preferably liquid food products which comprises a multilayered closure element consisting of a cover layer, a layer promoting adhesion, an adhesive layer, a layer of hot-sealing lacquer, and a layer of low density polyethylene (LDPE) with a filler material such as talc or chalk. This document further discloses a multilayered closure element for an outlet of the proposed packaging unit.

The purpose of JP 03 275444 A is to attain an excellent flavor maintaining function with respect to contents by forming the entire surface of the side of a lid coming in contact with the contents of a resin layer made up of the not-crystalline or low-crystalline saturated polyester resin having a glass transition temperature of at least 40°C. To this end, a lid laminate sheet is provided with a surface resin layer formed of any one of drawing polyethylene terephthalate resin, polybutylene terephthalate resin, polycarbonate resin and adhesive polyethylene resin and with a reverse side resin layer consisting of the non-crystalline or low-crystalline saturated polyester resin layer having a glass transition temperature of at least 40°C and a pull tab has the reverse side layer formed of a non-crystalline or low-crystalline saturated polyester resin layer. The reverse side of the lid laminate sheet is built up in such layers that an opening part formed in the lid laminate sheet is blocked by a partial laminate resin layer formed of the non-crystalline or low-crystaline saturated polyester resin having a glass transition temperature of at least 40°C and the partial laminate resin layer and the reverse side layer of the pull tab are heat bonded together directly through the opening part of the lid laminate sheet.

### [Disclosure of the Invention]

### [Problems to be solved by the Invention]

An object of the present invention is to provide a packaging container having an opening section provided on an top wall surface thereof, the opening section tightly sealed from under with innertape, and also capable of providing an excellent edge face because the innertape is easily broken at a portion near the edge portion of the opening section with an opening device when the opening section is to be unsealed.

Another object of the present invention is to provide a method of efficiently producing innertape having excellent properties by simultaneously coextruding layers constituting the innertape.

Still another object of the present invention is to provide innertape having an excellent function which can tightly seal an opening section of a container from the under and also can easily and sharply be broken at a portion near an edge portion of the opening section in association with an unsealing operation of an opening device when the opening section is to be unsealed.

### [Means for Solving the Problems]

To solve the problems as described above, the present invention provides a container having an opening section for a fluid food provided at a top thereof, an opening device above the opening section, and innertape used for tightly sealing an under surface of the opening section from the under side and along an outer circumference of the opening section. This innertape is a laminate including a linear and low density polyethylene outer layer having the layer thickness in the range from 1 to 9 microns and more preferably in the range from 3 to 7 microns; a low density polyethylene intermediate layer having the layer thickness in the range from 5 to 17microns and more preferably in the range from 7 to 15 microns; an adhesive layer having the layer thickness in the range from 1 to 8 microns and more preferably in the range from 3 to 6 microns; an ethylene-vinyl alcohol copolymer barrier layer with the ethylene content in the range from 35 to 49 moles, more preferably in the range from 40 to 44 moles and also having the layer thickness in the range from 2 to 9 microns and more preferably in the range from 4 to 7 microns; an adhesive layer having the layer thickness in the range from 1 to 8 microns and more preferably in the range from 3 to 6 microns; a low density polyethylene layer having the layer thickness in the range from 5 to 17 microns and more preferably in the range from 7 to 15 microns; and a linear and low density polyethylene outer layer having the layer thickness in the range from 1 to 9 microns and more preferably in the range from 3 to 7 microns. The layers are laminated in the order as described above.

In a preferable aspect of the present invention, the linear now density polyethylene is prepared by using metallocene catalyst.

In a preferable aspect of the present invention, density of the linear low density polyethylene is in the range from 0.905 to 0.922, and more preferably in the range from 0.911 to 0.920.

In a preferable aspect of the present invention, density of the low density polyethylene intermediate layer is in the range from 0.915 to 0.930, and more preferably in the range from 0.917 to 0.923.

The method of producing innertape according to the present invention is employed for producing innertape used for sealing a container having an opening section provided at a top thereof for a fluid food and also having an opening device provided above the opening by sealing an under surface of the opening section along the outer circumference thereof from the under side. This method includes a step of coextruding linear low density polyethylene having the density in the range from 0.905 to 0.922 and more preferably in the range from 0.911 to 0.920, low density polyethylene having the density in the range from 0.915 to 0.930 and more preferably in the range from 0.917 to 0.923, adhesive including linear low density polyethylene graft-modified by a chemically bonding functional group with ethylene-vinyl alcohol copolymer, an ethylene-vinyl alcohol copolymer layer with the ethylene content in the range from 35 to 49 moles and more preferably in the range from 40 to 44 moles, adhesive including linear low density polyethylene graft-modified by a chemically bonding functional group with ethylene-vinyl alcohol copolymer, low density polyethylene having the density in the range from 0.915 to 0.930 and more preferably in the range from 0.917 to 0.923, and linear low density polyethylene in the range from 0.905 to 0.922 and more preferably in the range from 0.911 to 0.920 in the order described above to obtain innertape which is a laminate including a linear low density polyethylene outer layer with the layer thickness in the range from 1 to 9 microns and more preferably in the range from 3 to 8 microns, a low density polyethylene intermediate layer with the layer thickness in the range from 5 to 17 microns and more preferably in the range from 7 to 15 microns, an adhesive layer with the layer thickness in the range from 1 to 8 microns and more preferably in the range from 3 to 6 microns, an ethylene-vinyl alcohol copolymer layer with the ethylene content in the range from 35 to 49 moles and more preferably in the range from 40 to 44 moles and also with the layer thickness in the range in the range from 2 to 9 microns and preferably in the range from 4 to 7 microns, an adhesive layer with the layer thickness in the range from 1 to 8 microns and more preferably in the range from 3 to 6 microns, a low density polyethylene intermediate layer with the layer thickness in the range from 5 to 17 microns and more preferably in the range from 7 to 15 microns, and a linear low density polyethylene outer layer with the layer thickness in the range from 1 to 9 microns and more preferably in the range from 3 to 7 microns which are laminated in the order described above.

The innertape according to the present invention is used for sealing innertape used for sealing a container having an opening section provided at a top thereof for a fluid food and also having an opening device provided above the opening by sealing an under surface of the opening section along the outer circumference thereof from the under side, and this innertape includes a linear low density polyethylene outer layer with the layer thickness in the range from 1 to 9 microns and more preferably in the range from 3 to 7 microns, a low density polyethylene intermediate layer with the layer thickness in the range from 5 to 17 microns and more preferably in the range from 7 to 15 microns, an adhesive layer with the layer thickness in the range from 1 to 8 microns and more preferably in the range from 3 to 6 microns, an ethylene-vinyl alcohol copolymer layer with the ethylene content in the range from 35 to 49 moles and more preferably in the range from 40 to 44 moles and also with the layer thickness in the range in the range from 2 to 9 microns and preferably in the range from 4 to 7 microns, an adhesive layer with the layer thickness in the range from 1 to 8 microns and more preferably in the range from 3 to 6 microns, a low density polyethylene intermediate layer with the layer thickness in the range from 5 to 17 microns and more preferably in the range from 7 to 15 microns, and a linear low density polyethylene outer layer with the layer thickness in the range from 1 to 9 microns and more preferably in the range from 3 to 7 microns which are laminated in the order described above.

### [Effect of the Invention]

The present invention described above provides the following effects.
The packaging container according to the present invention has an opening section provided on a top wall surface, and the opening section is sealed with innertape having a specific seven-layered structure according to the present invention, and especially the linear low density polyethylene outer layer has the specific optimal layer thickness and the specific optimal density, so that the innertape has the excellent sealing capability and can tightly seal the opening section provided in the top wall surface of the container from the under side.

When the opening section tightly sealed is unsealed, because the innertape has the specific 7-layered structure according to the present invention, especially the ethylene-vinyl alcohol copolymer barrier layer has the specific optimal layer thickness and the specific optimal ethylene content, and the low density polyethylene intermediate layer has the specific optimal layer thickness and the specific optimal density, the innertape has the excellent break property, and therefore when the pull-tab is pealed off, the innertape can easily and sharply be broken at a position near an edge portion of the opening section.

In the method of producing innertape according to the present invention, by simultaneously coextruding constituent layers of the innertape, the innertape having excellent properties can efficiently be produced. Especially, the adhesive agent includes linear low density polyethylene as the base and is graft-modified by a functional group capable of chemically reacting with the ethylene-vinyl alcohol copolymer. This adhesive agent has the compatibility with the linear low density polyethylene used in the outer layer, and the graft-modified functional group can chemically react with the ethylene-vinyl alcohol copolymer, so that the adhesive agent has the excellent adhesion properties with the barrier layer.

The innertape according to the present invention can tightly seal the opening section of the container from the under side, and also can easily and sharply be broken at a position hear an edge portion of the opening in association with an operation for unsealing the opening with an opening device.

### [Brief Description of the Drawings]

[Fig. 1]
   Fig. 1 is a cross-sectional view illustrating an opening section and a portion near the opening section.
[Fig. 2]
   Fig. 2 is a perspective view illustrating an example of a packaging container.

### [Descriptions of Signs]

1. Packaging container
2. Main body of the packaging container
3. Opening section
4. Pull-tab
5. Innertape

### [Best Mode for Carrying out the Invention]

An embodiment of the present invention is described in detail below.
A packaging container according to the present invention has an opening section for a fluid food provided at a top thereof, and the opening section is protected with a pull-tab from the upper side, and furthermore the packaging container has innertape for tightly sealing for the opening section from the under side by sealing an under surface of the opening section and an inner surface of the pull-tab together.
A form, a structure, and a material of the packaging container can freely be selected and changed. For instance, the present invention is applicable to a gable-top paper container, a brick- shaped paper container, a tetrahedron paper container, a plastic-paper hybrid container, and a cup-shaped container.

Fig. 2 is an example of a packaging container according to an embodiment of the present invention. A packaging container 1 has a container main body 2 and an opening section 3 for a fluid food provided at a top thereof.
Fig. 1 is a cross-sectional view illustrating the opening section and a portion of the container near the opening section. A material for a laminated packaging material used for forming the top portion includes, for instance, an polyethylene outermost layer 2a, a paper base layer 2b, an aluminum foil layer 2d, and a polyethylene innermost layer 2c. The opening section 3 is covered with the pull-tab 4 including the aluminum foil layer and the polyethylene inner layer, and is tightly sealed by sealing an top surface of the opening along the outer circumference 3a and an inner surface of the pull-tab 4 (polyethylene inner layer). The opening section 3 is covered with innertape 5 from the under side of the opening section 3, and the opening section 3 is tightly sealed by sealing an under surface of the opening section along the outer circumference 3a and the inner surface of he pull-tab 4 with the innertape 5.

The innertape according to the embodiment of the present invention is a laminate with a seven layered structure including a linear low density polyethylene outer layer with the layer thickness in the range from 1 to 9 microns and more preferably in the range from 3 to 7 microns, and having the density preferably in the range from 0.911 to 0.917, a low density polyethylene intermediate layer with the layer thickness in the range from 5 to 17 microns and more preferably in the range from 7 to 15 microns, and having the density preferably in the range from 0.917 to 0.923, an adhesive layer having the layer thickness in the range from 1 to 8 microns and more preferably in the range from 3 to 6 microns, an ethylene-vinyl alcohol copolymer barrier layer with the ethylene content in the range from 35 to 49 moles and more preferably in the range from 40 to 44 moles and also with the layer thickness in the range in the range from 2 to 9 microns and preferably in the range from 4 to 7 microns, an adhesive layer with the layer thickness in the range from 1 to 8 microns and more preferably in the range from 3 to 6 microns, a low density polyethylene intermediate layer with the layer thickness in the range from 5 to 17 microns and more preferably in the range from 7 to 15 microns, and having the density preferably in the range from 0.917 to 0.923, and a linear low density polyethylene outer layer with the layer thickness in the range from 1 to 9 microns and more preferably in the range from 3 to 7 microns, and having the density preferably in the range from 0.911 to 0.917 which are laminated in the order described above.
The innertape described above has the specific layer thickness, the 7-layered structure, the specific barrier layer, a sealant layered structure, so that the remarkable effects of the present invention are provided.

A linear low density polyethylene used for an outer layer of the innertape according to the embodiment of the present invention is linear low density polyethylene having narrow molecular weight distribution. In a preferred embodiment, the linear low density polyethylene is produced by using metallocene catalyst.

An adhesive resin (adhesive agent) used for laminating a barrier layer and an intermediate layer of the innertape described above is, for instance, linear low density polyethylene, ethylene-vinyl acetate copolymer (EVA), or ionomer (10) prepared by crosslinking molecules in ethylene-methacrylic acid vinyl copolymer with metal ions, ethylene methacrylic acid copolymer (EMAA), ethylene acrylic acid copolymer (EAA), ethylene vinyl acetate copolymer (EVA) and polymer obtained by denaturing any of the polymers above.

Preferable adhesive resin (an adhesive agent) adapted to use under the conditions above is an adhesive agent including linear low density polyethylene graft-modified by a chemically bonding functional group with ethylene vinyl alcohol copolymer.
This adhesive resin has a functional group introduced by means of a grafting reaction, and resin as the base is low density polyethylene, preferably linear low density polyethylene. The functional group is capable of chemically reacting with the ethylene vinyl alcohol copolymer. With this adhesive resin layer, the functional group chemically reacts with the ethylene vinyl alcohol copolymer to be bonded with the barrier layer tightly. On the other hand, the functional group has the compatibility with low density polyethylene of in the intermediate layer adjoining the base resin and tightly bonds with the intermediate layer.
Preferable adhesive resin has an MFR in the range from 3.8 to 4.2, a density in the range from 907 to 910, and the Vicat softening point in the range from 72°C to 76°C.

Conventional lamination methods can be employed as a method of producing a laminated structure for this innertape. The methods available for this purpose include, for instance, the co-extrusion lamination method in this purpose in which the resins constituting the laminated structure are melt-extruded from the extruders respectively and the plurality of resin layers are laminated; the thermal lamination in which polyethylene films for the outer and inner layers are thermally applied via an adhesive agent (including an anchor-coating agent) on a film of the barrier, the melt-extrusion lamination method in which polyethylene films for the outer and inner layers are simultaneously or sequentially melt-extruded from extruders or the like and applied on the barrier layer film, and the sandwich lamination method.

A preferable producing method adapted to use in this embodiment is the co-extrusion lamination method.
This method includes a step of coextruding linear low density polyethylene having the density in the range from 0.905 to 0.922 and more preferably in the range from 0.911 to 0.920, low density polyethylene having the density in the range from 0.915 to 0.930 and more preferably in the range from 0.917 to 0.923, an adhesive agent including linear low density polyethylene graft-denatured by a chemically bonding functional group with ethylene vinyl alcohol copolymer, ethylene-vinyl alcohol copolymer with the ethylene content in the range from 35 to 49 moles and more preferably in the range from 40 to 44 moles, an adhesive agent including linear low density polyethylene graft-denatured by a chemically bonding functional group with ethylene vinyl alcohol copolymer, low density polyethylene having the density in the range from 0.915 to 0.930 and more preferably in the range from 0.917 to 0.923, and a linear low density polyethylene in the range from 0.905 to 0.922 and more preferably in the range from 0.911 to 0.920 in the order described above.

In the method of producing the innertape according to the embodiment of the present invention, by simultaneously coextruding constituent layers of the innertape, the innertape having excellent properties can efficiently be produced.

### [Examples]

The present invention is described in detail below with reference to several examples.

### [Example 1]

Metallocene-catalyzed linear low density polyethylene (mLLDPE) (having the density of 0.920) produced by using metallocene catalyst, low density polyethylene (LDPE) (having the density of 0.923), an adhesive agent (Ad) (having the MFR of 4.0, the density of 0.909, and the Vicat softening point of 74°C, product name: ADMER NF559 produced by Mitsui Chemicals, Inc) including graft-modified linear low density polyethylene, and ethylene vinyl alcohol copolymer (EVOH) (having the ethylene content of 40 moles) are prepared.

The resins described above are heated and melted and the melted resins are fed into a co-extrusion die in the order of mLLDPE/ LDPE/ Ad/EVOH/ Ad/ LDPE/ mLLDPE, and molded into a film. The molded multilayer film has a layered structure including mLLDPE (with the layer thickness of 5 microns) /LDPE (with the layer thickness of 1 micron) /Ad (with the layer thickness of 5 microns) /EVOH (with the layer thickness of 6 microns) /Ad (with the layer thickness of 5 microns) /LDPE (with the layer thickness of 11 microns) /mLLDPE (with the layer thickness of 5 microns).

### [Example 2]

Melted resins are fed into a co-extrusion die in the order of mLLDPE (with the density of 0.912) /LDPE (with the density of 0.917) /Ad /EVOH (with the ethylene content of 43 moles) /Ad /LDPE (with the density of 0.917) /mLLDPE (with the density of 0.912) and molded into a film.
The obtained multilayered film has a layered structure including mLLDPE (with the layer thickness of 7 microns) /LDPE (with the layer thickness of 13 micron) /Ad (with the layer thickness of 5 microns) /EVOH (with the layer thickness of 6 microns) /Ad (with the layer thickness of 5 microns) /LDPE (with the layer thickness of 13 microns) /mLLDPE (with the layer thickness of 7 microns).

### [Example 3]

Melted resins are fed into a co-extrusion die in the order of mLLDPE (with the density of 0.907) /LDPE (with the density of 0.923) /Ad /EVOH (with the ethylene content of 35 moles) /Ad /LDPE (with the density of 0.923) /mLLDPE (with the density of 0.907) and molded into a film.
The obtained multilayered film has a layer structure including mLLDPE (with the layer thickness of 5 microns) /LDPE (with the layer thickness of 11 microns) /Ad (with the layer thickness of 5 microns) /EVOH (with the layer thickness of 6 microns) /Ad (with the layer thickness of 5 microns) /LDPE (with the layer thickness of 11 microns) /mLLDPE (with the layer thickness of 5 microns).

### [Example 4]

Melted resins are fed into a co-extrusion die in the order of mLLDPE(with the density of 0.912)/LDPE(with the density of 0.930) /Ad /EVOH (with the ethylene content of 40 moles) /Ad /LDPE (with the density of 0.930)/mLLDPE(with the density of 0.912) and molded into a film.
The obtained multilayered film has a layer structure including mLLDPE (with the layer thickness of 5 microns) /LDPE (with the layer thickness of 11 microns) /Ad (with the layer thickness of 5 microns) /EVOH (with the layer thickness of 6 microns)/Ad(with the layer thickness of 5 microns)/LDPE(with the layer thickness of 11 microns) /mLLDPE (with the layer thickness of 5 microns).

### [Comparative Example 1]

Linear low density polyethylene (mLLDPE)(with the density of 0.920), an adhesive agent (Ad)(having the MFR of 4.0, the density of 0.909, and the Vicat softening point of 74°C, product name: ADMER NF559 made by Mitsui Chemicals, Inc) including linear low density polyethylene graft-denatured, and ethylene vinyl alcohol copolymer(EVOH)( having a ethylene content of 40 moles) are prepared without using low density polyethylene(LDPE).

The resins described above are heated and melted, and the melted resins are fed into a co-extrusion die in the order of mLLDPE /Ad /EVOH /Ad /mLLDPE, and molded into a film.
The molded multilayered film has a layer structure including mLLDPE (with the layer thickness of 15 microns) /Ad (with the layer thickness of 5 microns) /EVOH (with the layer thickness of 6 microns) /Ad (with the layer thickness of 5 microns) /mLLDPE (with the layer thickness of 15 microns).

### [Comparative Example 2]

The resins described above are molded into a film in the same way as that in Example 1 except the point that the linear low density polyethylene (mLLDPE) produced with the metallocene catalyst is not used.
The molded multilayered film has a layer structure including LDPE (with the layer thickness of 11 microns) /Ad (with the layer thickness of 5 microns) /EVOH (with the layer thickness of 6 microns)/Ad(with the layer thickness of 5 microns) /LDPE (with the layer thickness of 11 microns).

### [Evaluation of the various types of innertape]

Various types of innertape are obtained from the multilayered films obtained in the examples described above. An opening section is sealed from the under side by sealing an under surface of the opening section sealed with a pull tab of a paper container shown in Fig. 2 along the outer circumference thereof using these various types of innertape.
How the innertape is broken at a portion near an edge portion of the opening section when peeling the pull tab of the paper container using the innertape of the above example to unseal the opening section is visually observed.

As a result of the observation, in the containers using the innertape produced in Examples 1 to 4 and in Comparative Example 2, the innertape is sharply cut, when the pull-tab is pealed off, without the tape extended in the area near an edge portion of the opening section, and nor with a portion of the tape left in the thread or small pieces. On the other hand, in the container using the innertape produced in Comparative Example 1, the innertape extends at a portion near the edge portion of the opening section and a portion of the innertape remains in the thread and small pieces after the innertape is broken.
How the opening section of the paper containers using the innertape produced in each of the Examples above and a pull-tab is sealed is evaluated. As a result of the evaluation, it is recognized that the excellent sealing characteristics is provided in the containers using the innertape produced in each of Examples 1 to 4 and in Comparative Example 1. In contrast, the excellent sealing characteristics are not provided in the container using the innertape produced in Comparative Example 2.

It is to be understood that the present invention is not limited to the specific embodiment described above, and various changes and modifications may be made without departing from the scope of the present invention.

### [Industrial applicability]

A packaging container according to the present invention can be applied to a packaging paper container filled with a fluid food such as juice or milk.

## Claims

1. A packaging container having an opening section for a fluid food provided at a top thereof, an opening device above the opening section, and innertape used for tightly sealing an under surface of the opening section from the under side and along an outer circumference of the opening section, wherein the innertape is a laminate including a linear low density polyethylene outer layer having the layer thickness in the range from 1 to 9 microns; a low density polyethylene intermediate layer having the layer thickness in the range from 5 to 17 microns; an adhesive layer having the layer thickness in the range from 1 to 8 microns; an ethylene vinyl alcohol copolymer barrier layer with the ethylene content in the range from 35 to 49 moles, and also having the layer thickness in the range from 2 to 9 microns; an adhesive layer having the layer thickness in the range from 1 to 8 microns; a low density polyethylene intermediate layer having the layer thickness in the range from 5 to 17 microns; and a linear low density polyethylene outer layer having the layer thickness in the range from 1 to 9 microns which are laminated in the order as described above.

2. The packaging container according to claim 1, wherein the innertape is a laminate including a linear low density polyethylene outer layer with the layer thickness in the range from 3 to 7 microns; a low density polyethylene intermediate layer with the layer thickness in the range from 7 to 15 microns; an adhesive agent layer with the layer thickness in the range from 3 to 6 microns; an ethylene vinyl alcohol copolymer barrier layer with the ethylene content in the range from 40 to 44 moles and also with the layer thickness in the range from 4 to 7 microns; an adhesive agent layer with the layer thickness in the range from 3 to 6 microns; a low density polyethylene intermediate layer with the layer thickness in the range from 7 to 15 microns; and a linear low density polyethylene outer layer with the layer thickness in the range from 3 to 7 which are laminated in the order as described above and the linear low density polyethylene is prepared by using metallocene catalyst.

3. The packaging container according to claim 1, wherein the linear low density polyethylene has the density in the range from 0.905 to 0.922.

4. The packaging container according to claim 3, wherein the linear low density polyethylene has the density in the range from 0.911 to 0.920.

5. The packaging container according to claim 1, wherein the low density polyethylene intermediate layer has the density in the range from 0.915 to 0.930.

6. The packaging container according to claim 5, wherein the low density polyethylene intermediate layer has the density in the range from 0.917 to 0.923.

7. A method of producing an innertape used for sealing a container having an opening section provided at a top thereof for a fluid food and also having an opening device provided above the opening section by sealing an under surface of the opening section along the outer circumference thereof from the under side, said method comprising the steps of:
coextruding linear low density polyethylene having the density in the range from 0.911 to 0.920; low density polyethylene having the density in the range from 0.917 to 0.923; an adhesive agent including linear low density polyethylene graft-modified by a chemically bonding functional group with ethylene-vinyl alcohol copolymer; ethylene vinyl alcohol copolymer with the ethylene content in the range from 35 to 49 moles; an adhesive agent including linear low density polyethylene graft-modified by a chemically bonding functional group with ethylene-vinyl alcohol copolymer; low density polyethylene having the density in the range from 0:917 to 0.923; and linear low density polyethylene having the density in the range from 0.911 to 0.920, in the order described above, and
obtaining an innertape which is a laminate including a linear low density polyethylene outer layer with the layer thickness in the range from 1 to 9 microns; a low density polyethylene intermediate layer with the layer thickness in the range from 5 to 17 microns; an adhesive layer with the layer thickness in the range from 1 to 8 microns; an ethylene vinyl alcohol copolymer barrier layer with the layer thickness in the range from 2 to 9 microns; an adhesive layer with the layer thickness in the range from 1 to 8 microns; a low density polyethylene intermediate layer with the layer thickness in the range from 5 to 17 microns; and a linear low density polyethylene outer layer with the layer thickness in the range from 1 to 9 micron which are laminated in the order described above.

8. The method of producing the innertape according to claim 7, wherein the ethylene vinyl alcohol copolymer has the ethylene content in the range from 40 to 44 moles.

9. An innertape used for sealing a container having an opening section provided at a top thereof for a fluid food and also having an opening device provided above the opening section by sealing an under surface of the opening section along the outer circumference thereof from the under side, which is a laminate including a linear low density polyethylene outer layer with the layer thickness in the range from 3 to 7 microns; a low density polyethylene intermediate layer with the layer thickness in the range from 7 to 15 microns; an adhesive agent layer with the layer thickness in the range from 3 to 6 microns; an ethylene vinyl alcohol copolymer barrier layer with the ethylene content in the range from 40 to 44 moles and also with the layer thickness in the range from 4 to 7 microns; an adhesive agent layer with the layer thickness in the range from 1 to 8 microns; a low density polyethylene intermediate layer with the layer thickness in the range from 5 to 17 microns; and a linear low density polyethylene outer layer with the layer thickness in the range from 1 to 9 microns which are laminated in the order as described above.

10. The innertape according to claim 9, wherein the adhesive layer is made of an adhesive agent including linear low density polyethylene graft-modified by a chemically bonding functional group with ethylene-vinyl alcohol copolymer.

## Patentansprüche

1. Verpackungsbehälter mit einem am oberen Ende davon vorgesehenen Öffnungsabschnitt für ein fluides Lebensmittel, einer Öffnungsvorrichtung auf dem Öffnungsabschnitt und einem Innenband, das zum dichten Verschließen einer unteren Fläche des Öffnungsabschnittes von der unteren Seite aus und entlang eines Außenumfangs des Öffnungsabschnittes verwendet wird, wobei das Innenband ein Laminat ist, das eine Außenschicht aus linearem Polyethylen mit niedriger Dichte, wobei die Schichtdicke im Bereich von 1 bis 9 Mikron liegt; eine Zwischenschicht aus Polyethylen mit niedriger Dichte, wobei die Schichtdicke im Bereich von 5 bis 17 Mikron liegt; eine Klebeschicht, wobei die Schichtdicke im Bereich von 1 bis 8 Mikron liegt; eine Ethylen-Vinylalkohol-Copolymer-Barriereschicht, wobei der Ethylengehalt im Bereich von 35 bis 49 mol liegt, und wobei die Schichtdicke ebenfalls im Bereich von 2 bis 9 Mikron liegt; eine Klebeschicht, wobei die Schichtdicke im Bereich von 1 bis 8 Mikron liegt; eine Zwischenschicht aus Polyethylen mit niedriger Dichte, wobei die Schichtdicke im Bereich von 5 bis 17 Mikron liegt; und eine Außenschicht aus linearem Polyethylen mit niedriger Dichte, wobei die Schichtdicke im Bereich von 1 bis 9 Mikron liegt, die in der wie oben beschriebenen Reihenfolge laminiert sind, einschließt.

2. Verpackungsbehälter nach Anspruch 1, wobei das Innenband ein Laminat ist, das eine Außenschicht aus linearem Polyethylen mit niedriger Dichte, wobei die Schichtdicke im Bereich von 3 bis 7 Mikron liegt; eine Zwischenschicht aus Polyethylen mit niedriger Dichte, wobei die Schichtdicke im Bereich von 7 bis 15 Mikron liegt; eine Klebeschicht, wobei die Schichtdicke im Bereich von 3 bis 6 Mikron liegt; eine Ethylen-Vinylalkohol-Copolymer-Barriereschicht, wobei der Ethylengehalt im Bereich von 40 bis 44 mol liegt, und wobei die Schichtdicke ebenfalls im Bereich von 4 bis 7 Mikron liegt; eine Klebeschicht, wobei die Schichtdicke im Bereich von 3 bis 6 Mikron liegt; eine Zwischenschicht aus Polyethylen mit niedriger Dichte, wobei die Schichtdicke im Bereich von 7 bis 15 Mikron liegt; und eine Außenschicht aus Polyethylen mit niedriger Dichte, wobei die Schichtdicke im Bereich von 3 bis 7 Mikron liegt, die in der wie oben beschriebenen Reihenfolge laminiert sind, einschließt und das lineare Polyethylen mit niedriger Dichte unter Verwendung von Metallocen-Katalysator hergestellt ist.

3. Verpackungsbehälter nach Anspruch 1, wobei bei dem linearen Polyethylen mit niedriger Dichte die Dichte im Bereich von 0,905 bis 0,922 liegt.

4. Verpackungsbehälter nach Anspruch 3, wobei bei dem linearen Polyethylen mit niedriger Dichte die Dichte im Bereich von 0,911 bis 0,920 liegt.

5. Verpackungsbehälter nach Anspruch 1, wobei bei der Zwischenschicht aus Polyethylen mit niedriger Dichte die Dichte im Bereich von 0,915 bis 0,930 liegt.

6. Verpackungsbehälter nach Anspruch 5, wobei bei der Zwischenschicht aus Polyethylen mit niedriger Dichte die Dichte im Bereich von 0,917 bis 0,923 liegt.

7. Verfahren zum Herstellen eines Innenbandes, das zum Verschließen eines Behälters mit einem am oberen Ende davon vorgesehenen Öffnungsabschnitt für ein fluides Lebensmittel und auch mit einer Öffnungsvorrichtung, die auf dem Öffnungsabschnitt vorgesehen ist, verwendet wird, durch Verschließen einer unteren Fläche des Öffnungsabschnitts entlang des Außenumfangs davon von der Unterseite aus, wobei das Verfahren die Schritte umfasst:
Coextrudieren von linearem Polyethylen mit niedriger Dichte, bei dem die Dichte im Bereich von 0,911 bis 0,920 liegt; Polyethylen mit niedriger Dichte, bei dem die Dichte im Bereich von 0,917 bis 0,923 liegt; einem Klebemittel, das lineares Polyethylen mit niedriger Dichte einschließt, das durch eine chemisch bindende funktionelle Gruppe mit Ethylen-Vinylalkohol-Copolymer pfropf-modifiziert wurde; Ethylen-Vinylalkohol-Copolymer, bei dem der Ethylengehalt im Bereich von 35 bis 49 mol liegt; einem Klebemittel, das lineares Polyethylen mit niedriger Dichte einschließt, das durch eine chemisch bindende funktionelle Gruppe mit Ethylen-Vinylalkohol-Copolymer pfropf-modifiziert wurde; Polyethylen mit niedriger Dichte, bei dem die Dichte im Bereich von 0,917 bis 0,923 liegt;
und linearem Polyethylen mit niedriger Dichte, bei dem die Dichte im Bereich von 0,911 bis 0,920 liegt; in der wie oben beschriebenen Reihenfolge, und
Erhalten eines Innenbandes, das ein Laminat ist, das eine Außenschicht aus linearem Polyethylen mit niedriger Dichte, wobei die Schichtdicke im Bereich von 1 bis 9 Mikron liegt; eine Zwischenschicht aus Polyethylen mit niedriger Dichte, wobei die Schichtdicke im Bereich von 5 bis 17 Mikron liegt; eine Klebeschicht, wobei die Schichtdicke im Bereich von 1 bis 8 Mikron liegt; eine Ethylen-Vinylalkohol-Copolymer-Barriereschicht,
wobei die Schichtdicke im Bereich von 2 bis 9 Mikron liegt; eine Klebeschicht, wobei die Schichtdicke im Bereich von 1 bis 8 Mikron liegt; eine Zwischenschicht aus Polyethylen mit niedriger Dichte, wobei die Schichtdicke im Bereich von 5 bis 17 Mikron liegt; und eine Außenschicht aus linearem Polyethylen mit niedriger Dichte, wobei die Schichtdicke im Bereich von 1 bis 9 Mikron liegt, die in der wie oben beschriebenen Reihenfolge laminiert sind, einschließt.

8. Verfahren zur Herstellung des Innenbandes nach Anspruch 7, wobei bei dem Ethylen-Vinylalkohol-Copolymer der Ethylengehalt im Bereich von 40 bis 44 mol liegt.

9. Innenband, das zum Verschließen eines Behälters verwendet wird, bei dem ein Öffnungsabschnitt am oberen Ende davon vorgesehenen ist, für ein fluides Lebensmittel, und bei dem auch eine Öffnungsvorrichtung auf dem Öffnungsabschnitt durch Verschließen einer unteren Fläche des Öffnungsabschnittes entlang des Außenumfangs davon von der Unterseite aus vorgesehen ist, die ein Laminat ist, das eine Außenschicht aus linearem Polyethylen mit niedriger Dichte, wobei die Schichtdicke im Bereich von 3 bis 7 Mikron liegt; eine Zwischenschicht aus Polyethylen mit niedriger Dichte, wobei die Schichtdicke im Bereich von 7 bis 15 Mikron liegt; eine Klebeschicht, wobei die Schichtdicke im Bereich von 3 bis 6 Mikron liegt; eine Ethylen-Vinylalkohol-Copolymer-Barriereschicht, wobei der Ethylengehalt im Bereich von 40 bis 44 mol liegt, und wobei die Schichtdicke ebenfalls im Bereich von 4 bis 7 Mikron liegt; eine Klebeschicht, wobei die Schichtdicke im Bereich von 1 bis 8 Mikron liegt; eine Zwischenschicht aus Polyethylen mit niedriger Dichte, wobei die Schichtdicke im Bereich von 5 bis 17 Mikron liegt; und eine Außenschicht aus Polyethylen mit niedriger Dichte, wobei die Schichtdicke im Bereich von 1 bis 9 Mikron liegt, einschließt, die in der wie oben beschriebenen Reihenfolge laminiert sind.

10. Innenband nach Anspruch 9, wobei die Klebeschicht aus einem Klebemittel hergestellt ist, das Polyethylen mit niedriger Dichte, das durch eine chemisch bindende funktionelle Gruppe mit Ethylen-Vinylalkohol-Copolymer pfropf-modifiziert wurde, einschließt.

## Revendications

1. Conteneur d'emballage ayant une section d'ouverture pour un aliment fluide prévue au sommet de celui-ci, un dispositif d'ouverture au-dessus de la section d'ouverture, et une bande interne utilisée pour sceller de façon étanche une sous-surface de la section d'ouverture depuis le côté inférieur et le long d'une circonférence extérieure de la section d'ouverture, dans lequel la bande intérieure est un stratifié incluant une couche extérieure en polyéthylène linéaire à basse densité ayant une épaisseur de couche dans la plage de 1 à 9 microns ; une couche intermédiaire en polyéthylène à basse densité ayant une épaisseur de couche dans la plage de 5 à 17 microns ; une couche adhésive ayant une épaisseur de couche dans la plage de 1 à 8 microns ; une couche barrière en copolymère éthylène-vinyle-alcool avec une teneur en éthylène dans la plage de 35 à 49 moles, et ayant une épaisseur de couche dans la plage de 2 à 9 microns ; une couche adhésive ayant une épaisseur de couche dans la plage de 1 à 8 microns ; une couche intermédiaire en polyéthylène à basse densité ayant une épaisseur de couche dans la plage de 5 à 17 microns ; et une couche extérieure en polyéthylène linéaire à basse densité ayant une épaisseur de couche dans la plage de 1 à 9 microns, qui sont stratifiées dans l'ordre tel que décrit ci-dessus.

2. Conteneur d'emballage selon la revendication 1, dans lequel la bande intérieure est un stratifié incluant une couche extérieure en polyéthylène linéaire à basse densité avec une épaisseur de couche dans la plage de 3 à 7 microns ; une couche intermédiaire en polyéthylène à basse densité avec une épaisseur de couche dans la plage de 7 à 15 microns ; une couche d'agent adhésif avec une épaisseur de couche dans la plage de 3 à 6 microns ; une couche de barrière en copolymère éthylène-vinyle-alcool avec une teneur en éthylène dans la plage de 40 à 44 moles et ayant une épaisseur de couche dans la plage de 4 à 7 microns ; une couche d'agent adhésif avec une épaisseur de couche dans la plage de 3 à 6 microns ; une couche intermédiaire en polyéthylène à basse densité avec une épaisseur de couche dans la plage de 7 à 15 microns ; et une couche extérieure en polyéthylène linéaire à basse densité ayant une épaisseur de couche dans la plage de 3 à 7 microns, qui sont stratifiées dans l'ordre tel que décrit ci-dessus, et le polyéthylène linéaire à basse densité est préparé en utilisant un catalyseur métallocène.

3. Conteneur d'emballage selon la revendication 1, dans lequel le polyéthylène linéaire à basse densité a une densité dans la plage de 0,905 à 0,922.

4. Conteneur d'emballage selon la revendication 3, dans lequel le polyéthylène linéaire à basse densité a une densité dans la plage de 0,911 à 0,920.

5. Conteneur d'emballage selon la revendication 1, dans lequel la couche intermédiaire en polyéthylène à basse densité a une densité dans la plage de 0,915 à 0,930.

6. Conteneur d'emballage selon la revendication 5, dans lequel la couche intermédiaire en polyéthylène à basse densité a une densité dans la plage de 0,917 à 0,923.

7. Procédé pour produire une bande intérieure utilisée pour étancher un conteneur ayant une section d'ouverture prévue à son sommet pour un aliment fluide et ayant également un dispositif d'ouverture prévu au-dessus de la section d'ouverture en étanchant une sous-surface de la section d'ouverture le long de la circonférence extérieure de celle-ci depuis le côté inférieur, ledit procédé comprenant les étapes consistant à :
coextruder un polyéthylène linéaire à basse densité ayant une densité dans la plage de 0,911 à 0,920 ; un polyéthylène à basse densité ayant une densité dans la plage de 0,917 à 0,923 ; un agent adhésif incluant un polyéthylène linéaire à basse densité modifié par greffage par un groupe fonctionnel assurant un collage chimique avec un copolymère éthylène-vinyle-alcool ; un copolymère éthylène-vinyle-alcool avec une teneur en éthylène dans la plage de 35 à 49 moles ; un agent adhésif incluant un polyéthylène linéaire à basse densité modifié par greffage par un groupe fonctionnel assurant un collage chimique avec un copolymère éthylène-vinyle-alcool ; un polyéthylène à basse densité ayant une densité dans la plage de 0,917 à 0,923 ; et un polyéthylène linéaire à basse densité ayant une densité dans la plage de 0,911 à 0,920, dans l'ordre décrit ci-dessus, et
obtenir une bande intérieure qui est un stratifié incluant une couche extérieure en polyéthylène linéaire à basse densité avec une épaisseur de couche dans la plage de 1 à 9 microns ; une couche intermédiaire en polyéthylène à basse densité avec une épaisseur de couche dans la plage de 5 à 17 microns ; une couche adhésive avec une épaisseur de couche dans la plage de 1 à 8 microns ; une couche de barrière en copolymère éthylène-vinyle-alcool avec une épaisseur de couche dans la plage de 2 à 9 microns ; une couche adhésive avec une épaisseur de couche dans la plage de 1 à 8 microns ; une couche intermédiaire en polyéthylène à basse densité avec une épaisseur de couche dans la plage de 5 à 17 microns ; et une couche extérieure en polyéthylène linéaire à basse densité avec une épaisseur de couche dans la plage de 1 à 9 microns, qui sont stratifiées dans l'ordre décrit ci-dessus.

8. Procédé pour produire la bande intérieure selon la revendication 7, dans lequel le copolymère éthylène-vinyle-alcool a une teneur en éthylène dans la plage de 40 à 44 moles.

9. Bande intérieure utilisée pour étancher un conteneur ayant une section d'ouverture prévue au sommet de celui-ci pour un aliment fluide et ayant également un dispositif d'ouverture prévu au-dessus de la section d'ouverture en étanchant une sous-surface de la section d'ouverture le long de la circonférence extérieure de celle-ci depuis le côté inférieur, qui est un stratifié incluant une couche extérieure en polyéthylène linéaire à basse densité avec une épaisseur de couche dans la plage de 3 à 7 microns ; une couche intermédiaire en polyéthylène à basse densité avec une épaisseur de couche dans la plage de 7 à 15 microns ; une couche d'agent adhésif avec une épaisseur de couche dans la plage de 3 à 6 microns ; une couche de barrière en copolymère éthylène-vinyle-alcool avec une teneur en éthylène dans la plage de 40 à 44 moles et une épaisseur de couche dans la plage de 4 à 7 microns ; une couche d'agent adhésif avec une épaisseur de couche dans la plage de 1 à 8 microns ; une couche intermédiaire en polyéthylène basse densité avec une épaisseur de couche dans la plage de 5 à 17 microns ; et une couche extérieure en polyéthylène linéaire à basse densité ayant une épaisseur de couche dans la plage de 1 à 9 microns, qui sont stratifiées dans l'ordre décrit ci-dessus.

10. Bande intérieure selon la revendication 9, dans laquelle la couche adhésive est réalisée avec un agent adhésif incluant un polyéthylène linéaire à basse densité modifié par greffage par un groupe fonctionnel assurant un collage chimique avec un copolymère éthylène-vinyle-alcool.
